# EUROPÄISCHE PATENTSCHRIFT

(11) **EP 1 310 147 B1**
(45) Veröffentlichungstag und Bekanntmachung des Hinweises auf die Patenterteilung: **08.06.2005**
(21) Anmeldenummer: 02020608.2
(22) Anmeldetag: 13.09.2002
(51) Int. Cl.: A01C 7/04

(54) **Vorrichtung zur vereinzelten Abgabe von Saatkörnern**
Single seed drilling machine
Semoir monograine

(30) Priorität: 07.11.2001 DE 10154625
(43) Veröffentlichungstag der Anmeldung: 14.05.2003
(73) Patentinhaber: Kverneland ASA, 4355 Kvernaland (NO)
(72) Erfinder: Schumacher, Ferdinand, 59510 Lippetal-Oestinghausen (DE); Meinel, Till, Dr., 59494 Soest (DE)
(74) Vertreter: Becker, Thomas U., Dr.

(56) Entgegenhaltungen:
- EP-A- 0 329 095
- DD-A- 279 159
- GB-A- 1 436 008
- US-A- 4 515 291
- PATENT ABSTRACTS OF JAPAN vol. 1996, no. 06, 28. Juni 1996 (1996-06-28) & JP 08 033408 A (YANMAR AGRICULT EQUIP CO LTD), 6. Februar 1996 (1996-02-06)

## Beschreibung

Die Erfindung betrifft eine Vorrichtung zur vereinzelten Abgabe von Saatkörnern. Eine solche Vorrichtung, die auch als "Einzelkornsämaschine" bezeichnet wird, ergibt sich beispielsweise aus der DE 22 42 272 A, die der Druchschrift GB-A-1 436 008 entspricht. Eine solche Vorrichtung umfaßt eine, um eine Achse drehbare Trommel, deren Innenraum (Hohlraum) an eine Unterdruckquelle angeschlossen wird. Auf diese Weise entsteht im Bereich von Löchern auf einer sogenannten Säscheibe, die die Trommel auf einer Seite begrenzt, ein jeweils lokaler Unterdruck.

Saatgut, welches über einen zugehörigen Saatgutbehälter zur Verfügung gestellt wird, wird vereinzelt im Bereich der Sauglöcher festgehalten.

Die DE 22 42 272 A1 sieht ferner vor, im Hohlraum der Trommel ein sogenanntes Unterbrecherelement anzuordnen, welches innenseitig gegen die rotierende Säscheibe anliegt und dann den Unterdruck im Bereich eines Saugloches unterbricht, wenn das betreffende Saugloch von dem genannten Unterbrecherelement abgedeckt wird. Auf der Außenseite der Säscheibe ist ein sogenannter Abwerfer vorgesehen, entlang dem das zunächst im Bereich eines Saugloches festgehaltene Saatkorn weggeführt und nach unten in eine zugehörige Furche abgelenkt wird.

Aufgrund seiner Anordnung und Geometrie kann das bekannte Unterbrecherelement das jeweils zugeordnete Saugloch nicht immer vollständig verschließen. Dadurch wird der Unterdruck im Bereich des betroffenen Sauglochs der Säscheibe nur teilweise abgebaut und verschiedene Saatkörner werden entsprechend unterschiedlich lang an der Säscheibe gehalten. Die Folge ist eine unregelmäßige Abgabe des Saatgutes in die Furche.

Soweit die DE 22 42 272 A1 ein scheibenförmiges Unterbrecherelement vorsieht kommt als Nachteil hinzu, daß jedenfalls dann mehrere Sälöcher (unerwünscht) gleichzeitig abgedichtet werden, wenn der Abstand der Löcher gering ist.

Eine Einzelkornsämaschine beschreibt auch die EP 0 329 095 A1. Innenseitig (im Hohlraum) ist an der Säscheibe ein scheibenförmiges Sperrelement befestigt, welches im Bereich der Sauglöcher von der Säscheibe weg verläuft. Eine, an einem stationären Arm befestigte Rolle sorgt dafür, daß der abstehende Rand des Sperrelementes an einer Stelle gegen die vorbeigeführten Sauglöcher gedrückt wird und damit den Unterdruck im Bereich des betroffenen Sauglochs aufhebt. Das außen auf dem betroffenen Saugloch liegende Saatkorn kann dann in die Furche abfallen.

Die Vorrichtung arbeitet insbesondere dann ungenau und der Unterdruck kann nur partiell aufgehoben werden, wenn Staub, Beize, Erd-/Sandpartikel oder dergleichen zwischen Sperrelement und Säscheibe geraten. Außerdem können auch hier (unerwünscht) mehrere Sälöcher (Sauglöcher) gleichzeitig abgedeckt werden.

Der Erfindung liegt die Aufgabe zugrunde, eine Vorrichtung der genannten Art anzubieten, die zuverlässig und sicher arbeitet, insbesondere eine gleichmäßige Saatkornabgabe unabhängig von den jeweiligen Boden- und Umweltbedingungen ermöglicht. Dabei wird vorzugsweise eine kleine Bauform angestrebt.

Grundgedanke der Erfindung ist es, im Hohlraum der Trommel, und zwar benachbart zu dem Bereich der Säscheibe, in dem die Sauglöcher angeordnet sind, einen Körper (ein Unterbrecherelement) anzuordnen, welches je nach Position der rotierenden Säscheibe ein vorbeigeführtes Saugloch von innen abdeckt, um so den Unterdruck im Bereich dieses Sauglochs aufzuheben, wobei dieser Körper selbst rotierend ist. Dabei soll die Rotationsrichtung des Körpers (im wesentlichen) der Rotationsrichtung der Säscheibe entsprechen.

Eine solche Anordnung hat verschiedene Vorteile:
- der entsprechende Körper kann (in Richtung seiner Achse) relativ schmal sein, wodurch die Größe (Tiefe) der Trommel (in Richtung ihrer Drehachse) reduziert wird,
- bei einer rotationssymmetrischen Ausbildung des Körpers, beispielsweise als Scheibe, kann der Antrieb form- und/oder kraftschlüssig unmittelbar entlang der inneren Umfangswand der (rotierenden) Trommel, oder einer entsprechenden Schiene erfolgen,
- durch die Relativbewegung von Körper und Säscheibe kommt es zu einem ständigen "Reinigungseffekt" zwischen den korrespondierenden Flächenabschnitten,
- im Gegensatz zu einem stationären Unterbrecherelement, gegen das eine rotierende Drehscheibe geführt wird, kommt es nicht zur (unerwünschten) Ausbildung von Rillen oder Riefen durch Fremdkörper auf der Innenseite der Säscheibe,
- die Größe des Körpers kann definiert eingestellt werden, daß zuverlässig jeweils nur ein Saugloch gleichzeitig abgedeckt wird.

Danach betrifft die Erfindung in ihrer allgemeinsten Ausführungsform eine Vorrichtung zur vereinzelten Abgabe von Saatkörnern, mit den Merkmalen des Hauptanspruchs.

Optimale konstruktive Verhältnisse ergeben sich dadurch, dass der Körper auf einer parallel zur Drehachse verlaufenden Achse geführt wird. Hierdurch kann die Tiefe der Trommel (in Achsrichtung) minimiert werden.

Gleichzeitig wird zum Beispiel bei einem scheibenförmigen Körper eine vollflächige Anlage der korrespondierenden Stirnseiten von Körper und Säscheibe sichergestellt.

Nach einer Ausführungsform ist der Körper um eine stationäre Achse drehbar, das heißt, der Körper behält stets seine definierte Position, in der er rotiert, während die Säscheibe rotierend an dem Körper vorbeigeführt wird.

Um eine sichere Auflage des Körpers gegen die Innenseite der Säscheibe zu erreichen (und damit eine sichere Abdichtung gegenüber dem jeweiligen Saugloch) sieht eine Ausführungsform vor, den Körper mit Druck gegen die Säscheibe anliegen zu lassen. Dies kann beispielsweise mit einer Ausführungsform erfolgen, bei der der Körper am Ende eines (Feder)Arms befestigt ist, wobei der Arm beispielsweise von einer Blattfeder gebildet werden kann.

Das andere Ende dieses Arms kann an einer die Trommel aufnehmenden Welle (stationär) festgelegt sein.

Eine rotationssymmetrische Ausbildung des Körpers (insbesondere in Form einer Scheibe oder eines Zylinders), schafft nicht nur die Möglichkeit, die Vorrichtung insgesamt schmal zu bauen, sondern hat auch den Vorteil, daß der Körper beispielsweise auf einer den Hohlraum umgreifenden äußeren Mantelfläche abrollbar und damit drehbar ist. Diese Mantelfläche kann gleichzeitig die innere Umfangsfläche der Trommel sein.

Um die Rotationsbewegung des Körpers zu unterstützen sieht eine weitere Ausführungsform vor, den Körper umfangsseitig mit einem Reibbelag oder einer Reibbeschichtung auszubilden beziehungsweise die Umfangsfläche profiliert zu gestalten, um so den Haftreibungskoeffizienten gegenüber der korrespondierenden Abrollfläche zu erhöhen.

Aus Aufgabe und Funktion der Vorrichtung folgt, daß der Körper, der der Unterbrechung des Unterdrucks im Bereich des betroffenen Sauglochs dient, eine größere Querschnittsfläche aufweisen muß als das betreffende Saugloch. Nach einer Ausführungsform ist deshalb der gegen die Säscheibe anliegende Teil des Körpers so gestaltet, daß der entsprechende Flächenabschnitt 1,1 bis 25 mal größer ist als die Querschnittsfläche eines zugehörigen Sauglochs.

Umgekehrt kann der gegen die Säscheibe anliegende Teil des Körpers eine Fläche aufweisen, die (auch deutlich) kleiner als 10 % der Gesamtfläche der Säscheibe ist.

Daraus folgt, beispielsweise für einen Körper mit kreisförmiger Kontaktfläche zur Säscheibe beziehungsweise ringförmiger Umfangsfläche, daß die Umdrehungsgeschwindigkeit des Körpers ein Vielfaches der Umdrehungsgeschwindigkeit der Säscheibe beträgt.

Die ständige Rotation des Körpers (Vakuumunterbrechers) während des Betriebs, das heißt bei sich drehender Säscheibe, hat den Vorteil, daß Fremdkörper, wie Sandoder Staubpartikel, Beizreste des Saatgutes oder Saatgutsplitter aus dem Bereich der Sauglöcher wegtransportiert werden und die Säscheibe kontinuierlich von Fremdpartikeln gereinigt wird. Durch die hohe Rotationsgeschwindigkeit des Körpers werden Fremdteilchen sehr schnell weggeführt. Ein zwischen Körper und Säscheibe geratener Fremdpartikel wird bei rotierendem Körper beispielsweise spiralförmig nach außen geführt, bis er in den Hohlraum abgeschleudert und von dort abgesaugt wird.

Durch die drehende Bewegung des Unterbrecherelementes auf der langsamer drehenden Säscheibe ergibt sich insgesamt ein (geringer) gleichmäßiger Verschleiß auf der gesamten Ringfläche, die der Körper gegenüber der Säscheibe berührt. Auch im Verschleißfall wird deshalb die Dichtwirkung des Körpers nicht beeinträchtigt.

Die Säscheibe kann auf ihrem Kontaktbereich zum Körper eine oder mehrere Vertiefungen aufweisen. Diese Vertiefungen dienen ebenfalls dazu, etwaige Fremdteilchen aufzunehmen, ohne die Dichtwirkung zwischen Körper und Säscheibe zu beeinträchtigen. Die Vertiefung kann beispielsweise ringförmig sein, wie in der nachfolgenden Figurenbeschreibung dargestellt.

Der Körper selbst kann zumindest auf seiner der Säscheibe zugewandten Oberfläche aus einem verformbaren Material bestehen, beispielsweise aus Kunststoff oder einer Kautschukqualität (einem Gummi oder gummiartigen Werkstoff).

Im übrigen entspricht die Vorrichtung einer bekannten Einzelkornsämaschine, wie sie beispielsweise in dem eingangs genannten Stand der Technik beschrieben sind.

Weitere Merkmale der Erfindung ergeben sich aus-den Merkmalen der Unteransprüche sowie den sonstigen Anmeldungsunterlagen.

Die Erfindung wird nachstehend anhand eines Ausführungsbeispieles näher beschrieben.

Dabei zeigen - jeweils in schematisierter Darstellung -:
- Figur 1:: eine perspektivische Seitenansicht (teilweise im Aufriß) einer erfindungsgemäßen Vorrichtung,
- Figur 2:: einen Querschnitt durch die Vorrichtung nach Figur 1.

In den Figuren sind gleiche oder gleichwirkende Bauteile mit gleichen Bezugsziffern dargestellt.

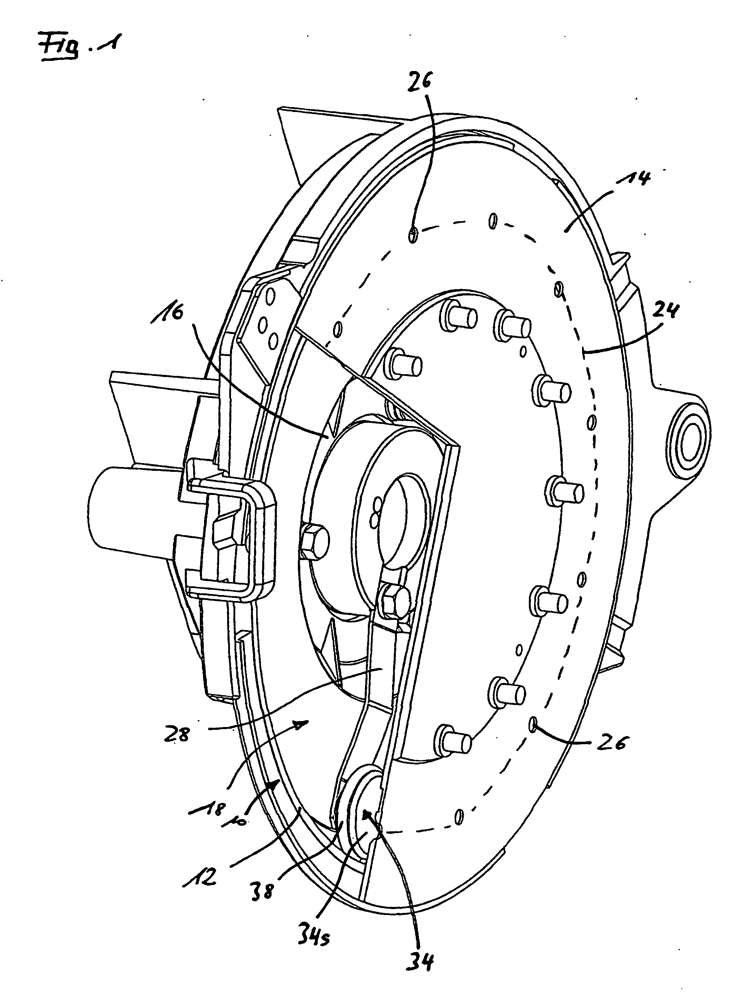

Die in Figur 1 dargestellte Vorrichtung umfaßt im wesentlichen einen trommelartigen Körper 10 mit einer ringförmigen Umfangswand 12, einer stirnseitigen Säscheibe 14 und einer der Säscheibe 14 gegenüberliegenden Rückwand 16, die gemeinsam einen Hohlraum 18 umschließen.

Die Trommel 10 ist drehbar auf einer Welle 20 angeordnet, deren Achse das Bezugszeichen 22 trägt.

Die Führung und Lagerung der Trommel 10 auf der Welle 20 wird nicht näher beschrieben, weil sie an sich bekannt sind und für den Erfindungsgedanken ohne Bedeutung.

Wie insbesondere Figur 1 zu entnehmen ist, weist die Säscheibe 14 auf einer gedachten Kreislinie 24 eine Reihe von Sauglöchern 26 auf, die untereinander jeweils einen gleichen Abstand aufweisen.

Von der Welle 20 verläuft ein Federarm 28 im wesentlichen senkrecht zur Achse 22. Der Federarm 28 ist stationär im Bereich der Welle 20 fixiert und trägt an seinem gegenüberliegenden Ende 28e (benachbart der Umfangswand 12) eine parallel zur Achse 22 verlaufende Welle 30 mit einer entsprechend parallel zur Drehachse 22 verlaufenden Achse 32, auf der ein scheibenförmiger Körper 34 über ein Drehlager 36 aufsitzt.

Eine vordere Stirnfläche 34s des Körpers 34 liegt gegen die Säscheibe 14 innenseitig an, und zwar aufgrund des Anpreßdrucks der Feder 28.

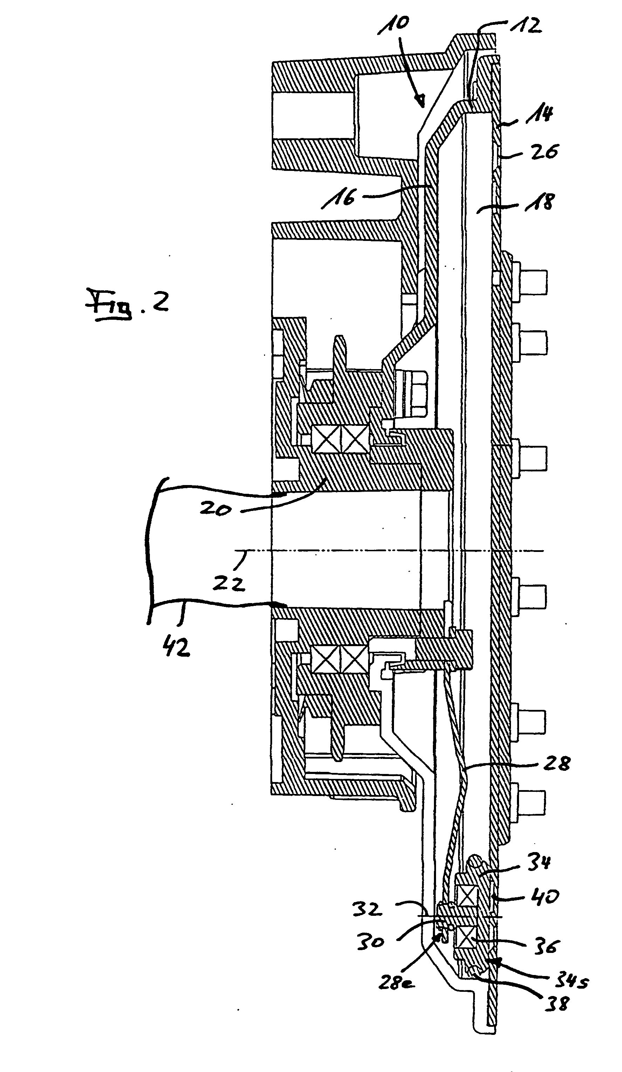

Wie sich aus den Figuren 1 und 2 ergibt liegt der Körper 34 dabei so gegen die Innenseite der Säscheibe 14 an, daß er eine korrespondierende Saugöffnung 26 und angrenzende Bereiche der Innenseite der Säscheibe abdeckt.

Im dargestellten Ausführungsbeispiel verläuft die Achse 32 etwas versetzt nach innen im Verhältnis zum Mittelpunkt der Saugöffnungen 26 beziehungsweise des gedachten Kreisrings 24.

Auf seiner Umfangsfläche weist der Körper 34 einen elastischen Ring 38 auf, der innenseitig gegen die Umfangswand 12 anliegt, so daß der Körper 34 bei rotierender Trommel 10 sich um die Welle 30 dreht, und zwar mit einer sehr viel größeren Umdrehungsgeschwindigkeit als die Säscheibe 14.

Dabei überstreicht der Körper 34 einen ringförmigen Streifen auf der Innenseite der Säscheibe 14, dessen Breite dem Durchmesser des Körpers 34 im Kontaktbereich zur Säscheibe 14 entspricht.

Innerhalb dieses ringförmigen Flächenabschnitts weist die Säscheibe 14 innenseitig eine ringförmige Vertiefung 40 auf, die insbesondere der Aufnahme von Feststoffpartikeln dient, die sich zwischen Körper 34 und Säscheibe 14 unerwünscht angesammelt haben.

Die Funktion der Vorrichtung ist wie folgt:

Im Hohlraum 18 wird ein Unterdruck erzeugt (über eine an die Hohlwelle 20 angeflanschte Unterdruckleitung 42). Entsprechend liegt an den Sauglöchern 26 ein Unterdruck an, der es ermöglicht, im Bereich jedes Sauglochs außenseitig (in Figur 2: rechts) jeweils ein Saatkorn festzuhalten, welches über eine nicht dargestellte Saatgutzuführung auf bekannte Art und Weise antransportiert wird.

Dieser Unterdruck ist lediglich im Bereich des einen Sauglochs unterbrochen, welches in der jeweiligen Position der Säscheibe 14 vom Körper 34 innenseitig abgedeckt wird.

Dadurch, daß jeweils nur 1 Saugloch zu einem Zeitpunkt abgedeckt ist ergibt sich bei konstanter Rotationsgeschwindigkeit der Säscheibe 14 ein konstantes Abwurfintervall für die einzelnen Saatkörner beziehungsweise ein konstanter Abstand zwischen den in einer Furche abgelegten Saatkörnern bei konstanter Geschwindigkeit der Zugmaschine.

## Patentansprüche

1. Vorrichtung zur vereinzelten Abgabe von Saatkörnern, mit folgenden Merkmalen:
1.1 einer Trommel (10),
1.2 die Trommel (10) ist um eine Drehachse (22) rotierbar,
1.3 ein in der Trommel (10) ausgebildeter Hohlraum (18) ist an eine Unterdruckquelle (42) anschließbar,
1.4 eine Stirnseite des Hohlraums (18) wird von einer Säscheibe (14) begrenzt, in der auf einer gedachten Kreisbahn (24) mehrere Sauglöcher (26) im Abstand zueinander angeordnet sind,
1.5 im Hohlraum (18) ist ein Körper (34) angeordnet, der
1.6 um eine mit Abstand und parallel zur Drehachse (22) angeordnete Achse (32) drehbar ist und
1.7 mit einem Teil (34s) seiner Oberfläche so gegen die Säscheibe (14) anliegt, dass er bei rotierender Säscheibe (14) ein jeweils vorbeigeführtes Saugloch (26) innenseitig temporär abdichtet.

2. Vorrichtung nach Anspruch 1, deren Körper (34) um eine stationäre Achse (32) drehbar ist.

3. Vorrichtung nach Anspruch 1, deren Körper (34) mit Druck gegen die Säscheibe (14) anliegt.

4. Vorrichtung nach Anspruch 1, deren Körper (34) rotationssymmetrisch gestaltet ist.

5. Vorrichtung nach Anspruch 1, deren Körper (34) eine Scheibenform aufweist.

6. Vorrichtung nach Anspruch 1, deren Körper (34) mit einer der Säscheibe (14) zugewandten Oberfläche (34s) ausgebildet ist, die flächig ist und parallel zur Säscheibe (14) verläuft.

7. Vorrichtung nach Anspruch 1, deren Körper (34) am Ende (28e) eines Arms (28) befestigt ist, dessen anderes Ende an einer die Trommel (10) aufnehmenden Welle (20) festgelegt ist.

8. Vorrichtung nach Anspruch 1, deren Körper (34) auf einer den Hohlraum (18) umgreifenden äußeren Mantelfläche (12) abrollbar ist.

9. Vorrichtung nach Anspruch 1, deren Körper (34) umfangsseitig einen Reibbelag (38) aufweist oder profiliert ausgebildet ist.

10. Vorrichtung nach Anspruch 1, bei der der gegen die Säscheibe (14) anliegende Teil (34s) des Körpers (34) eine Fläche aufweist, die 1,1 bis 25 mal größer als die Querschnittsfläche eines Sauglochs (26) ist.

11. Vorrichtung nach Anspruch 1, bei der der gegen die Säscheibe (14) anliegende Teil (34s) des Körpers (34) eine Fläche aufweist, die kleiner als 10% der Gesamtfläche der Säscheibe (14) ist.

12. Vorrichtung nach Anspruch 1, deren Säscheibe (14) auf ihrem Kontaktbereich zum Körper (34) eine oder mehrere Vertiefungen (40) aufweist.

13. Vorrichtung nach Anspruch 12, bei der mindestens eine Vertiefung (40) ringförmig ist.

14. Vorrichtung nach Anspruch 1, deren Körper (34) zumindest auf seiner der Säscheibe zugewandten Oberfläche (34s) aus einem verformbaren Material besteht.

15. Vorrichtung nach Anspruch 1, deren Körper (34) aus Kunststoff oder einer Kautschukqualität besteht.

## Claims

1. Device for the individualised discharge of seed corns, with the following features:
1.1 a drum (10),
1.2 the drum (10) is rotatable about an axis of rotation (22),
1.3 a hollow space (18) formed in the drum (10) can be connected to a source (42) of reduced pressure,
1.4 a front side of the hollow space (18) is bounded by a seed plate (14) in which are arranged on an imaginary circular path (24) a plurality of suction holes (26) spaced apart from one another,
1.5 in the hollow space (18) is arranged a body (34) that
1.6 is rotatable about an axis (32) arranged at a distance from and parallel to the axis of rotation (22) and
1.7 a part (34s) of its surface rests against the seed plate (14) in such a way that when the seed plate (14) rotates the said part temporarily seals on the inside a suction hole (26) that is respectively led past.

2. Device according to claim 1, in which the body (34) is rotatable about a stationary axis (32).

3. Device according to claim 1, in which the body (34) rests under pressure against the seed plate (14).

4. Device according to claim 1, in which the body (34) is formed rotationally symmetrical.

5. Device according to claim 1, in which the body (34) is in the shape of a plate.

6. Device according to claim 1, in which the body (34) is formed having a surface (34s) facing the seed plate (14), the said surface being planar and running parallel to the seed plate (14).

7. Device according to claim 1, in which the body (34) is secured to the end (28e) of an arm (28), the other end of which is fastened to a shaft (20) receiving the drum (10).

8. Device according to claim 1, in which the body (34) can roll on an outer jacket surface (12) surrounding the hollow space (18).

9. Device according to claim 1, in which the body (34) has a friction lining (38) on the circumference or is designed having a profiled shape.

10. Device according to claim 1, in which the part (34s) of the body (34) resting against the seed plate (14) has a surface area that is 1.1 to 25 times larger than the cross-sectional surface area of a suction hole (26).

11. Device according to claim 1, in which the part (34s) of the body (34) resting against the seed plate (14) has a surface area that is less than 10% of the total surface area of the seed plate (14).

12. Device according to claim 1, in which the seed plate (14) has on its contact region with the body (34) one or more depressions (40).

13. Device according to claim 12, in which at least one depression (40) is annular.

14. Device according to claim 1, in which the body (34) consists, at least on its surface (34s) facing the seed plate, of a deformable material.

15. Device according to claim 1, in which the body (34) consists of plastics or a rubber-like material.

## Revendications

1. Semoir monograine aux caractéristiques suivantes :
1.1 un tambour (10)
1.2 le tambour (10) est rotatif autour d'un axe de rotation (22),
1.3 un espace creux (18) formé dans le tambour (10) peut être raccordé à une source de dépression (42),
1.4 une face frontale de l'espace creux (18) est délimitée par un disque d'ensemencement (14) sur lequel sont placés, à distance l'un de l'autre, plusieurs trous d'aspiration ( 26) sur une trajectoire circulaire (24) imaginaire,
1.5 dans l'espace creux (18) est placé un corps (34) qui
1.6 est rotatif autour d' un axe (32) disposé à distance et parallèlement à l'axe de rotation (22) et
1.7 en appui avec une partie (34s) de sa surface contre le disque d'ensemencement (14) de telle sorte qu'il réalise, au moment de la rotation du disque d'ensemencement (14), une étanchéité temporaire par l'intérieur du trou d'aspiration (26) qui passe devant.

2. Semoir monograine selon la revendication 1 dont le corps (34) est rotatif autour d'un axe stationnaire (32).

3. Semoir monograine selon la revendication 1 dont le corps (34) s'appuie par pression contre le disque d'ensemencement (14).

4. Semoir monograine selon la revendication 1 dont le corps (34) est conformé de manière symétrique en rotation.

5. Semoir monograine selon la revendication 1 dont le corps (34) présente une forme de disque.

6. Semoir monograine selon la revendication 1 dont le corps (34) est conformé avec une surface (34s) orientée vers le disque d'ensemencement (14), qui est plane et s'étend parallèlement au disque d'ensemencement (14).

7. Semoir monograine selon la revendication 1 dont le corps (34) est fixé à l'extrémité (28e) d'un bras (28) dont l'autre extrémité est fixement reliée à un arbre (20) supportant le tambour (10).

8. Semoir monograine selon la revendication 1 dont le corps (34) est déroulable sur une surface d'enveloppe (12) extérieure englobant l'espace creux (18).

9. Semoir monograine selon la revendication 1 dont le corps ( 34) présente sur sa circonférence une garniture de friction (38) ou une forme profilée.

10. Semoir monograine selon la revendication 1 pour lequel la partie (34s) du corps (34) en appui contre le disque d'ensemencement (14) présente une surface qui est 1,1 à 25 fois plus grande que la surface de la section d'un trou d'aspiration (26).

11. Semoir monograine selon la revendication 1 pour lequel la partie (34s) du corps (34) en appui contre le disque d'ensemencement (14) présente une surface inférieure à 10 % de la surface totale du disque d'ensemencement (14).

12. Semoir monograine selon la revendication 1 dont le disque d'ensemencement (14) présente sur sa zone de contact avec le corps (34), un ou plusieurs creux (40).

13. Semoir monograine selon la revendication 12, pour lequel au moins un creux (40) a une forme annulaire.

14. Semoir monograine selon la revendication 1 dont le corps (34) est constitué, au moins sur sa surface (34s) orientée vers le disque d' ensemencement, d' un matériau déformable.

15. Semoir monograine selon la revendication 1 dont le corps (34) est constitué de matière plastique ou d'une variété de caoutchouc.
